# EUROPEAN PATENT APPLICATION

(11) **EP 1 157 613 A1**
(43) Date of publication of application: **28.11.2001**
(21) Application number: 01304588.5
(22) Date of filing: 24.05.2001
(51) Int. Cl.: A21D 13/00, A21D 8/02, A21D 15/02, A21C 11/16

(54) **Co-extruded filled dough products and process for making same**

(30) Priority: 25.05.2000 US 579081
(71) Applicant: KRAFT FOODS, INC., Northfield, Illinois 60093 (US)
(72) Inventor: Howard, Walter E., Libertyville, Illinois 60048 (US); Tangprasertchai, Uraiwan, Hoffman Estates, Illinois 60195 (US); Delpierre, Phillip, Gurnee, Illinois 60031 (US); Forneck, Kevin R., Morton Grove, Illinois 60053 (US); Lopez, Amado R., Chicago, Illinois 60634 (US); Forneck, Keith D., Hanover Park, Illinois 60103 (US)
(74) Representative: Eyles, Christopher Thomas

(57) **Abstract**

A co-extruded, pre-baked product comprising a dough enrobed filling (14) which can be distributed in a refrigerated or frozen state and heated prior to consumption is provided. The product is formed by coextruding the dough (12) and filling mixtures (14) wherein the filling is enrobed or contained within the dough. Preferably the filling (14) is fully enrobed or contained within the dough (12). The filling (12) is preferably a cheese filling but it may also contain flavors and/or particulate material, such as meat and/or vegetables. The dough enrobed filling product, when formed into a long, cylindrical shape, is ideally suited for heating on a roller grill in, for example, a retail convenience store or other food establishment.

## Description

### Field of the Invention

This invention is directed to a co-extruded, pre-baked product comprising a dough enrobed filling which can be distributed in a refrigerated or frozen state and heated prior to consumption. The product is formed by co-extruding the dough and filling mixtures wherein the filling is fully enrobed or contained within the dough. The filling is preferably a cheese filling but it may also contain flavors and/or particulate material, such as meat and/or vegetables. The dough enrobed filling product, when formed into a long, cylindrical shape, is ideally suited for heating on a roller grill in, for example, a retail convenience store or other food establishment.

### Background of the Invention

Convenience foods (i.e., products which are quick to prepare and require a minimum amount of attention) are in high demand to accommodate today's busy lifestyles. Examples range from cheese and cracker snacks and canned stews to refrigerated bagels and some frozen dinners. Typically, such products will be eaten as packaged or after a brief heating period. Notably absent from this category are bread products.

Baked bread products are normally available as freshly prepared products that are intended to be consumed within a relatively short time period or as frozen products which can be stored in the frozen state for relatively long periods of time. Such frozen bread products, once thawed, generally must also be consumed within a relatively short time period. Baked bread products are generally not sold as refrigerated products. Once a fully baked bread product has been refrigerated, it tends to "toughen" or become leathery, stale, and/or dry. See, for example, David, English Bread and Yeast Cookery, American Edition, p. 255 (Viking Press, New York 1977). When such a bread product becomes "leathery," it becomes harder to chew and loses its "chewability."

Reheating such a leathery bread product does not generally restore the bread's texture and may, in fact, further "toughen" it to form an even more leathery texture. Thus, while such a leathery bread product may be fully edible from all health and safety considerations, the consumer's enjoyment obtained from such a reheated product is generally less, often significantly less, than those experienced when the bread product was fresh; much of the loss of quality is due to the bread product becoming increasingly more leathery. Thus, fully baked bread products are not often found in grocery refrigerator cases.

Additionally, bread products generally tend to become "leathery" when they are heated and maintained at such a heated state for prolonged periods of time (e.g., about an hour or more). Thus, it has been difficult to provide bread type products which might be heated on a grill or in an oven until sold. Such bread type products which could be heated in such a manner would be ideally suited for convenience store type outlets where the consumer could buy, and immediately consume, such products. Such bread type products would ideally require little attention from the convenience store personnel once they have been heated.

Recently, a fully enrobed cheese filling dough product was described in International Patent Publication No. WO 99/02039. The products described therein were generally prepared using a sheeted dough technology. A rectangularly-shaped dough sheet was formed, the filling was placed on the dough sheet, and then the fully enrobed dough product was formed by rolling up the dough into a cylindrical shape. The fully enrobed dough product could then be baked. Production of such products on a commercial scale would require significant labor and/or capital costs.

Thus, there remains a need for a bread product which can be baked, refrigerated or frozen, and subsequently reheated without further baking and without becoming leathery and which retains the desired textural and taste properties. Additionally, there remains a need for a bread product which can be heated and maintained at such a heated state for prolonged periods of time without becoming "leathery." Moreover, there still remains the need for a fully enrobed dough product which can be more easily manufactured commercially.

The present invention provides such pre-baked, dough products containing fully enrobed fillings. More specifically, the present invention provides a fully enrobed filling in a dough product which can be produced commercially by co-extrusion techniques and which is ideally suited for heating and sale in convenient type stores.

### Summary of the Invention

This invention is directed to a co-extruded, pre-baked product comprising a dough with an enrobed or contained filling which is intended to be distributed in a refrigerated or frozen state and heated prior to consumption. The product is formed by co-extruding the dough and filling wherein the filling is enrobed or contained within the dough. Preferably, the filling is fully enrobed or contained within the dough. The filling is preferably a cheese filling but it may also contain flavors and/or particulate material, such as meat and/or vegetables. When formed into a cylindrical shape, the co-extruded, pre-baked product is ideally heated on a roller grill.

This invention is also directed to a method of preparing such a product. This method generally comprises preparing an extrudable dough mixture and an extrudable filling mixture, forming a continuous dough enrobed filling blank or rope by co-extruding the extrudable dough mixture and the extrudable filling mixture, cutting the blank into appropriate sizes to form the unbaked dough enrobed filling product, proofing the unbaked dough enrobed filling product, baking the proofed unbaked dough enrobed filling product to form the pre-baked dough enrobed filling product, cooling the pre-baked dough enrobed filling product to a suitable storage temperature, and applying oil to outer surfaces of the pre-baked dough enrobed filling product. For purposes of this invention a "continuous dough enrobed filling blank or rope" is intended to mean a long length of dough enrobed filling product having multiple individual products which can be prepared by cutting or crimping the blank or rope along its long axis. Preferably, the pre-baked dough enrobed filling product is frozen before the oil is applied to the outer surfaces and the product is stored frozen. When formed into a cylindrical shape, the pre-baked dough enrobed filling product is ideally suited for heating on a roller grill in, for example, a convenience style retail outlet.

### Brief Description of the Drawings

Figure 1 provides a flow chart of a preferred process for preparing the co-extruded dough enrobed filling products of the present invention.
Figure 2 illustrates a co-extrusion system suitable for forming the dough enrobed filling continuous rope.
Figure 3 illustrates a preferred co-extrusion head suitable for forming the dough enrobed filling continuous rope.
Figure 4 provides side and cross-sectional views of a co-extruded dough enrobed filling continuous rope of the present invention.
Figure 5 provides side and cross-sectional views of another co-extruded dough enrobed filling continuous rope of the present invention.
Figure 6 provides side and cross-sectional views of a pre-baked dough enrobed filling product of the present invention.
Figure 7 provides side and cross-sectional views of another pre-baked dough enrobed filling product of the present invention.

### Detailed Description of the Invention

The present invention provides a method for preparing a co-extruded, pre-baked product comprising a dough with an enrobed or contained filling which is intended to be distributed in a refrigerated or frozen state; the produce can be prepared (e.g., heated to an appropriate temperature) prior to consumption. This method generally comprises preparing an extrudable dough mixture and an extrudable filling mixture, forming a dough enrobed filling continuous rope by co-extruding the extrudable dough mixture and the extrudable filling mixture, cutting the continuous rope into appropriate sizes to form the unbaked dough enrobed filling product, proofing the unbaked dough enrobed filling product, baking the proofed unbaked dough enrobed filling product to form the pre-baked dough enrobed filling product, cooling the pre-baked dough enrobed filling product to a suitable storage temperature, and applying oil to outer surfaces of the pre-baked dough enrobed filling product. The resulting product can then be packaged and shipped in a refrigerated or frozen state. Preferably, the pre-baked dough enrobed filling product is frozen when the oil is applied to the outer surfaces and the product is stored frozen. When formed into a cylindrical shape, the pre-baked dough enrobed filling product is ideally suited for heating on a roller grill in, for example, a convenience style retail outlet.

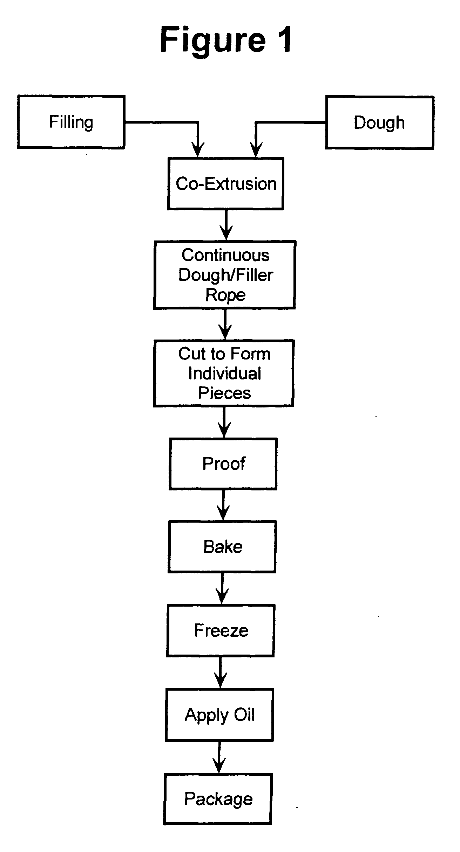

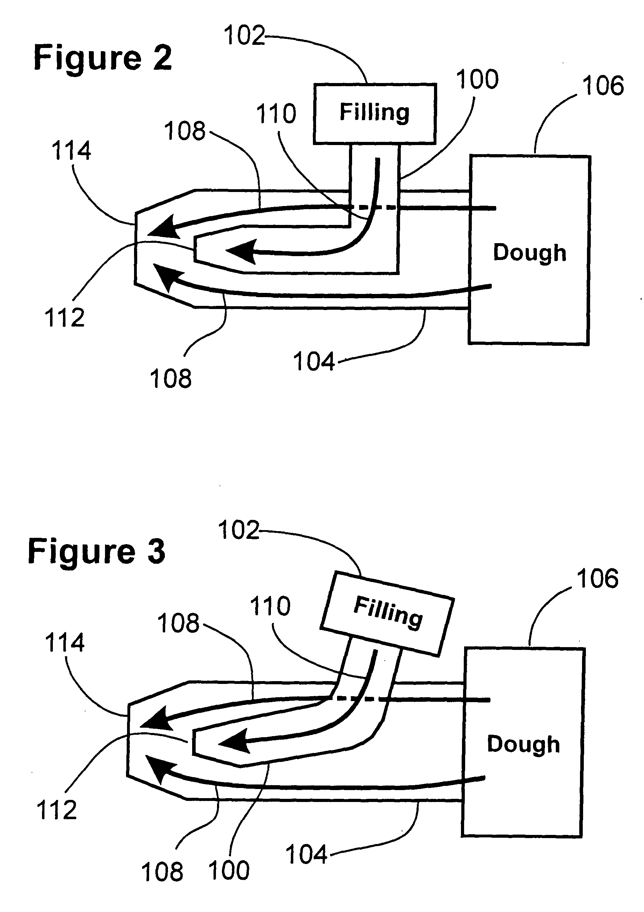

A preferred method for preparing the dough enrobed filling products of the present invention is illustrated in Figure 1. After the dough and filling mixtures are prepared, they are co-extruded to form a dough enrobed filling rope or continuous length. A suitable co-extrusion system is shown in Figure 2. This co-extrusion system has a filling container 102 which is in communication with filling extruder passageway 100 having outlet 112 and a dough supply 106 which is communication with dough extruder passageway 104 having outlet 114. Preferably the outlets 112 and 114 are centered with respect to each other. Likewise, the filling extruder passageway 100 adjacent to the outlet 114 and the dough extruder passageway 104 are preferably centered axially with respect to each other. The filling mixture passes through filling extruder passageway 100 as illustrated with flow line 110. The dough mixture passes through dough passageway 104 in an essentially "straight pathway" as illustrated in flow lines 108. Importantly, the dough mixture (including the yeast) is not subjected to excessive stress or shock as it passes through the extruder head and out of dough outlet 114. Such excessive stresses, which are to be avoided, could arise if the dough mixture was forced to turn or move through "angled" passageways. Thus, as shown in Figure 2, the co-extrusion system is designed so that the dough mixture passes through the system in an essentially straight pathway (as indicated by flow lines 108) without, or at least with minimized, turns or other changes in direction. Likewise, in order to further minimize stresses on the dough mixture as it is co-extruded, it is generally preferred that the distance between the dough mixture source 106 and the dough mixture outlet 114 is minimized and the cross-sectional area of the outlet 114 is not significantly reduced as compared to the cross-sectional area of the dough extruder passageway 104. Generally, the cross-sectional area of the outlet 114 should be no less than about 40 percent of the cross-sectional area of the dough extruder passageway 104. Suitable extruders for use in the present invention include, for example, Vemag extruders (VEMAG Anlagenbau GmbH, Verden (Aller), Germany; Model 500 is especially preferred) which are normally used for sausage and wiener production.

Although the stresses placed on the filling mixture as it passes through the co-extrusion system are not as critical as compared to the dough mixture, it is generally preferred that they, to the extent possible, also be minimized. Thus, although the pathway 110 does include a change in direction, the angle could be reduced, the passageway 100 could be formed with more gently curved turns, and the distance from the filling source 102 and the outlet 112 could be reduced. Such a co-extrusion system is shown in Figure 3, wherein the filling passageway 100 is angled relative to the long axis of the extruder and the passageway 100 has a smoother profile (i.e., the filling mixture is not required to traverse sharp bends or turns), thereby reducing shear stress on the filling mixture. Although not shown, the shear stress on the filling in the Figure 2 co-extrusion system could be reduced by replacing the right angle turn in the filling passageway 100 with a rounded or curved turn. Preferably, both outlets 112 and 114 are essentially circular to provide cylindrical shaped extruded products.

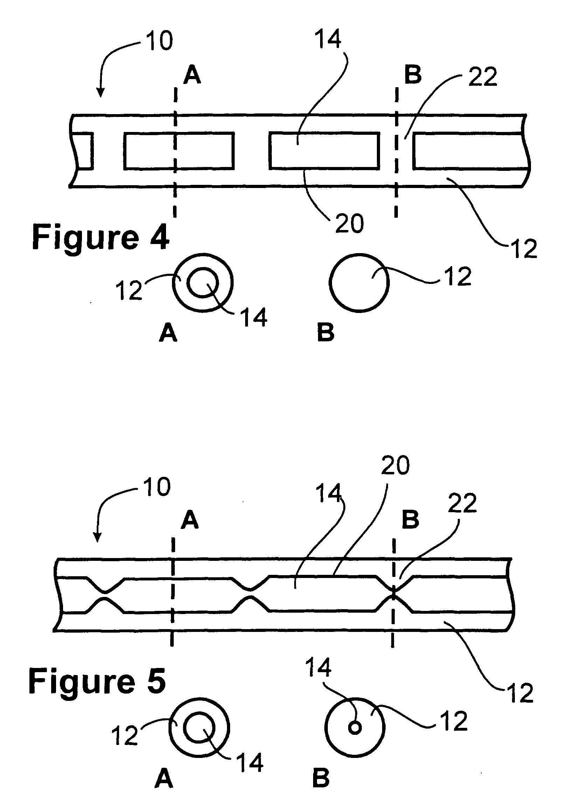

Figures 4 and 5 illustrates two different forms of co-extruded dough enrobed filling continuous ropes 10 provided by the co-extrusion systems of Figures 2 or 3 wherein both outlets 112 and 114 are essentially circular. The continuous extruded rope 10 of Figure 4 can be prepared by "pulsing" the filling mixture 102 such that the filling 14 is enrobed within the dough 12 in discrete or separate masses 20. Each of the filling 14 are separated by areas 22 containing only dough 12 (as indicated by the cross-section B). The continuous extruded rope 10 of Figure 5 is also prepared by "pulsing" the filling mixture 102; in this case, however, the areas 22 between the dough masses 20 still contain a reduced amount of filling 12 (i.e., a "pinch point"). If desired, the filling mixture 102 can be extruded continuously such that, when the continuous rope is cut, the filling mixture 102 is exposed on the ends of the individual products; in this case, however, the filling mixture 102 should be formulated such that filling does not boil out during the baking process.

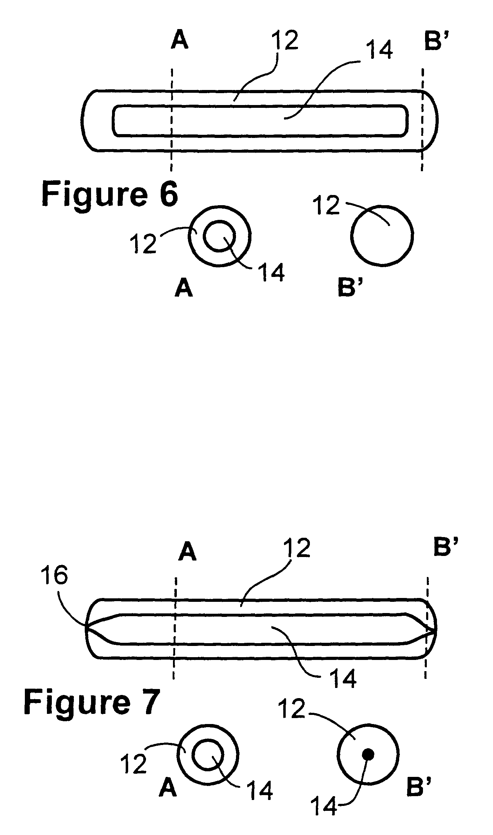

The continuous rope is then cut, sliced, or crimped between the filling mass 20 in the area 22 (i.e., along line B in Figures 4 and 5) to form the individual products. Preferably, each individual product is cut so as to contain only one section 22 of filling as shown in Figures 6 and 7. As illustrated in Figure 4, cutting the continuous rope in the area free of filling allows the dough ends of the individual products to fully enrobe or encase the filling portion. Cutting the continuous rope of Figure 5 in the area containing the least amount of filling might allow some filling to "show through" or be exposed at the ends of the individual products. In such cases, it is generally preferred that the cutting or crimping operation is carried out so that the ends of the individual products are pinched or crimped so that the amount of exposed filling is reduced to zero or at least minimized. In other words, the dough near the ends is shaped by the cutting knife or crimper so as to cover the potentially exposed filling near the end of the final product. Alternatively, the ends could be further shaped after cutting to fold the dough over the ends to effectively cover the potentially exposed filling near the end of the final product.

Although the long cylindrical shapes shown in Figures 6 and 7 are preferred, other shapes and configurations can be prepared if desired by modifying the cross-sectional shapes of outlets 112 and 114. The long cylindrical shapes of Figures 6 and 7 are ideally suited for reheating on a roller grill in, for example, a convenience retail store. Suitable product lengths for such cylindrical products are about 2 to about 9 inches (about 5.08 to about 22.86 cm), with about 5.5 to about 6.5 inches (about 13.97 to about 16.51 cm) being preferred; suitable product diameters are about 0.5 to about 2 inches (about 1.27 to about 5.08 cm) with about 1.25 to about 1.5 inches (about 3.18 to about 3.81 cm) being preferred. Generally, the fully enrobed filling should be about 2 to about 9 inches (about 5.08 to about 22.86 cm) long with a diameter of about 0.25 to about 1.5 inches (about 0.25 to about 3.81 cm), with about 0.5 to about 1 inches (about 1.27 to about 2.54 cm) being preferred. A properly sized and shaped product will have, in addition to the dimensions just listed, the ability to be reheated on a roller grill. Such a product can easily be rotated and heated on a roller grill for its "on-grill" shelf life (generally at least about three hours, more preferably at least about four hours).

Once the individual pieces are formed, the product is proofed to allow the dough to rise. Conventional proofing conditions are generally not acceptable in the present application. Although not wishing to be limited by theory, it appears that the extrusion process may disrupt the gluten structure formed during mixing and that additional proof time and/or proof conditions may be required to restore this structure so that the desired texture for the product can be acquired following the bake step. Additionally, contact of the dough with metal during extrusion causes a reduction in dough temperature. As a result, it appears that significant shock to the yeast occurs which necessitates changes from conventional proofing processes. Because of such shock, the yeast requires time to recover and thus longer proof times are generally necessary. To the extent possible, such stresses or shock should be avoided; thus, for example, the extrusion system should be designed to allow the dough mixture to pass through in an essentially straight pathway (see Figures 2 and 3).

Proofing conditions (e.g., temperature, humidity, and time) should be controlled so that a satisfactory product can be obtained. As those skilled in the art will realize, suitable proofing conditions can vary depending upon other process conditions (including both upstream and downstream conditions) and dough formulation. Thus, suitable proofing conditions can be determined empirically using routine experimentation. Generally, however, suitable proofing conditions include temperatures of about 90 to about 130°F (about 32.22 to about 54.44°C), humidity of about 25 to about 90 percent, and a duration of about 20 to about 60 minutes. Preferably, the proofing temperature is about 105 to about 115°F (about 40.56 to about 46.11°C); the proofing humidity is about 30 to about 40 percent and the proofing duration is about 25 to about 30 minutes. Preferably, the individual products are proofed in a pan or other container which can also be utilized during the baking step in order to avoid a separate transfer step. Preferably, such pans or other containers have cavities to accept the individual products and to prevent the individual products from shifting during the remaining process steps (e.g., during baking). In order to obtain more uniform baking, perforated pans are generally preferred (e.g., perforations of about 1/16 to about 1/4 inches [about 0.16 to about 0.64 cm] in diameter and more preferably of about 1/8 inch [about 0.32 cm] diameter).

Higher proof temperatures and humidities, of course, can be used to reduce proof times; unfortunately, such conditions generally result in inferior products due to breaking, shredding, and other defects. Higher humidity generally affects product volume and results in an oversized baked product with poor pan release after the baking step. The effect of higher humidity is especially noted using perforated pans (e.g., 1/8 inch [0.32 cm] diameter holes). Under conditions of higher humidity during proofing, the dough can become somewhat "slack" so that a portion of the dough can enter into the perforations. After baking, such products will be more difficult to remove from the baking pans. Using a low humidity (generally less than about 40 percent) generally results in good to excellent pan release; however the resulting baked product tends to have a dry surface and thick skin and is more likely to break and shred. Generally, break and shred issues can be resolved by increasing the proofing time (e.g., greater than about 30 minutes).

Although other type commercial baking systems can be used, multiple zone, impingement type ovens are generally preferred. Impingement tunnel ovens having at least two zones are preferred; impingement tunnel ovens having three to five zones are especially preferred. Especially preferred are Meincke ovens (SASIB Food & Beverage Machinery, Plano, Texas). Product size (diameter), finished product color, degree of bake (i.e., doneness), and pan release are important criteria in determining baking conditions. Actual baking settings may be different from oven to oven. Thus, as one skilled in the art will realize, specific baking settings can be determined by routine experimentation in the specific oven to be used. Nonetheless, and using a five zone oven with a perforated baking pan as an example, the following criteria or considerations generally provide suitable baking conditions.
(1) Pan release is best controlled with high bake temperatures in the initial zones (i.e., the first and/or second zones). Although not wishing to be limited by theory, it appears that the dough structure is set early in the bake cycle. As such, pan flow is minimized thus preventing or minimizing dough cling to the pan through the pan perforations. Therefore, poor pan release is improved by increasing bake temperatures in the initial zones.
(2) Bake color is controlled with temperature modulations in the terminal zones (i.e., the last and/or last two zones) of the oven. Darker bake colors are lightened by lowering bake temperature in the terminal zones.
(3) Product diameter is best controlled with temperature in the initial zone. Product with a large diameter can be controlled by increasing temperature in the front zone. Higher temperature kills the yeast earlier in the bake cycle and reduces oven pop and, thus, prevents excessive volume increases for the product.
(4) Degree of bake is generally controlled with temperature in the middle and/or terminal zones. Properly sized product with good bake color is doughy on the inside. For three or five zone ovens, increasing the temperature in the middle zone allows the desired degree of baking without significant effect on the bake color. A darker than desired bake color can generally be corrected with a slight temperature reduction in the last or terminal zone.
Of course, ovens with five (or more zones) are generally preferred since they allow greater control over temperature within the various zones. Using only a two or three zone oven, the degree of doneness and bake color must be more carefully controlled by manipulating the temperature in the zones; nonetheless, the above guidelines should help assure an acceptable product.

Generally, bake times of about 3 to about 10 minutes with temperatures of about 275 to about 600°F (about 135.00 to about 315.56°C) have proven to be satisfactory when coupled with baking criteria discussed just above. Preferably, bake times of about 3.5 to about 6 minutes and temperatures of about 300 to about 525°F (about 148.89 to about 273.89°C) are used. Of course, as those skilled in the art will realize, specific bake conditions will vary from oven to oven of the same type as well as from different oven types.

After baking, the product is frozen using any suitable freezing unit. Generally a "floor" or "staged" time of about 5 to 30 minutes after removal from the oven is desirable to allow the product to cool somewhat before freezing. Preferred freezing units include, for example, spiral nitrogen freezers (BOC Gases and other suppliers). Although other freezing conditions can be used, a freezer temperature of about -65 to about -150°F (about -53.89 to about -101.11°C) is sufficient. The products are maintained in the freezer until frozen; generally freeze dwell or retention times of about 15 to about 30 minutes are sufficient. Preferably the freezer temperature is about - 100°F (about -73.33°C) or less and the retention time is about 20 minutes.

Preferably after freezing, oil is applied to the outer surfaces of the frozen products. Although not preferred, the oil could also be applied after baking but before freezing. Although other methods for applying the oil can be used, spraying is generally preferred since the amount of applied oil can more easily be controlled. Generally, for a cylindrical product of about 1.5 inches (about 3.81 cm) long and about 6 inches (about 15.24 cm) in diameter and using a spray application method, about 2 to about 3 grams is preferably applied to the outer surfaces; oil levels of down to about 0.25 grams can be used if desired. The oil may also, for example, be applied by dipping the product in the desired oil; generally, however, the amount of oil retained on the product is significantly higher (e.g., about 4 grams) than that applied by spraying. Suitable oils include any edible oil such as, for example, vegetable oils such as corn, canola, olive, sunflower seed, cottonseed and soybean oils, or mixtures thereof.

Subsequent reheating of the product without such applied oil on, for example, a roller grill will tend to dry the product out causing the formation of a tough crusty like product. Application of oil to the outer surfaces can significantly increase product life when the product is reheated. Thus, for example, the products of the present invention can be reheated on a roller grill and remain on the roller grill for three to four hours or more without a significant decrease in organoleptic properties. The product of this invention have, therefore, an "on-grill" shelf life of at least three hours, and preferably greater than four hours. Thus, for example, a convenience store could maintain the dough enrobed filling product at the desired serving temperature, and with good organoleptic properties, on a roller grill for extended periods of time with minimal attention from store personnel. Indeed, once the dough enrobed filling products are placed on the operating roller grill, further attention by store personnel is not required until a customer requests the product.

Once the product has been oiled, it is ready for packaging. Conventional packaging technology can be used depending on the intended use. Thus, the product could be packaged in individual or multiple units for use in the home kitchen or in retail outlets such as, for example, convenience stores. The product of this invention is ideally suited for reheating on a roller grill; the surface oil allows for a significant "on-grill" shelf life. Preferably, the products of this invention are packaged under an inert atmosphere or vacuum in an air or oxygen barrier film or container and shipped frozen. The user may store the product under freezer or refrigeration conditions for later use.

The filling is formulated such that it can be co-extruded with the dough and when the resulting product is reheated the filling does not boil-out from the surrounding dough. The dough is formulated so that it can be co-extruded with the filling. During storage, generally under refrigeration or frozen conditions, the filling retains moisture such that the baked dough does not become soggy and the filling maintains a creamy texture when the product is reheated by the consumer. Although filling containing no cheese or only small amounts of cheese can be used, preferred filling are cheese based. One such preferred cheese base filling is a dry-blended mixture which contains about 94 to about 99 percent process cheese or other cheese ingredients, 0 to about 2 percent water-soluble, hydrocolloid gum, and 0 to about 4 percent pregelatinized starch.

Various particulate materials, such as meat and/or vegetables, can be incorporated in the cheese base filling. Generally such particulates may be added to the filling at any desired level, but would typically be added at a level of about 25 to about 125 percent of the filling. The filling is formulated to have a water activity (A_{w}) of less than about 0.96, typically about 0.87 to about 0.95, and most typically about 0.90 to about 0.94; a moisture content of about 30 to about 50 percent, typically about 34 to about 40 percent, and a pH of about 4. 5 to about 6. 5. Examples of such particulates include, but are not limited to, ham, pepperoni, sausage, vegetables, fruit, sauces, egg, and the like.

The preferred cheese filling may include one or more of pasteurized process cheese, pasteurized process cheese food, or pasteurized process cheese spread, as these terms are known in the art (See Title 21, Section 133, of the United States Code of Federal Regulations). The process cheese ingredient may also be or contain non-standardized pasteurized process cheese products which are low-fat or fat-free yet contain some cheese and/or skim cheese. Pasteurized process cheese is defined by Title 21 of the United States Code of Federal Regulations Section 133.169 (1989). Pasteurized process cheese generally has a moisture level of less than about 43 percent, a fat level of greater than about 47 percent (based on cheese solids), and may also have melting salts, preservatives, and butterfat. In particular, pasteurized process cheese is the food prepared by comminuting and mixing, with the aid of heat, one or more cheeses of the same or two or more varities such as Neufchatel cheese, low fat cottage cheese,
cottage cheese, dry curd, cook cheese, hard grating cheese, semi-soft part-skim cheese, part-skim spiced cheese, and skim milk cheese for manufacturing with an emulsifying agent into a homogeneous plastic mass. During its preparation, pasteurized process cheese is heated for not less than 30 seconds at a temperature of not less than 150°F (65.56°C). The emulsifying agent (i.e., melting salt) is one or any mixture of the following: monosodium phosphate, disodium phosphate, dipotassium phosphate, trisodium phosphate, sodium metaphosphate (sodium hexametaphosphate), sodium acid pyrophosphate, tetrasodium pyrophosphate, sodium aluminum phosphate, sodium citrate, potassium citrate, calcium citrate, sodium tartrate and sodium potassium tartrate, in such quantity that the weight of the solids of such emulsifying agent is not more than 3 percent of the weight of the pasteurized process cheese. Melting salts fall within the general class of mineral emulsifiers. The melting salts help the protein in the cheese bind to the fat during cooling.

The cheese from which the process cheese is made may include natural cheeses of any variety such as American, cheddar, Swiss, mozzarella, Colby, provolone, or the like. The process cheese ingredient may be in whole or in part a melt-restricted cheese which are known in the art to be desirable for use inside bakery items. Melt restricted process cheese will typically not flow at temperatures below about 65.5°C ( about 150°F). The traditional method for restricting meltability of process cheese products involves the use of sodium hexametaphosphate, sodium acid pyrophosphate, and/or high rework levels of process cheese in the finished product. The water-soluble hydrocolloid gum that could be employed is preferably a cellulose gum, more preferably a methylcellulose, and/or a hydroxypropyl methylcellulose. These cellulose gums were found to control boil-out better than carrageenan, pectin, or locust bean gum. The preferred viscosity of the cellulose gum is from about 50 to about 600 millipascal seconds (mPas) or centipoise (measured at 2 percent concentration).

Generally the filling, prior to extrusion, should be free-flowing with a loose consistency. Additionally, the filling should be easily compressible during pumping and extrusion. Component temperatures, order of mixing ingredients, and incorporation of water and/or oil can be used to obtain proper lubricity and rheological properties to allow for filling flowability prior to extrusion and compressibility during extrusion. Generally the filling temperature should be in the range of about 35 to about 45°F (about 1.67 to about 7.22°C) during extrusion. Since it is generally preferred that the filling should be prepared shortly before extrusion, the temperature of the various ingredients can be used to achieve the desired filling temperature. Alternatively, the filling could be heated or cooled as necessary prior to extrusion. Preferably the cheese is kept in block form and then shredded as needed to avoid lumping during processing. With a filling temperature below 35°F (about 1.67°C), the extruder can stall or skip resulting in shorter pieces of inconsistent product weight. Specific filling formulations and methods of preparation are provided in the examples.

Generally the filling mixtures are only slightly mixed (i.e., total mixing times of generally less than a few minutes and preferably less than one minute). Over mixing generally results in excessive bleeding and a pasty consistency which is not acceptable for extrusion. Mixing times are generally adjusted to obtain a loose consistency, free-flowing filling with minimal lumps of pastiness. The cheese is preferably freshly shredded immediately prior to mixing. Generally, cheese and meat containing fillings are prepared as follows: The cheese base (at about 35 ± 5°F [about 1.67 ± 2.78°C]) and dry ingredients (ambient temperature) are gently mixed for about 10 to 30 seconds. The cheese base, preferably freshly shredded, should be in a loose and free-flowing form. Other minor cheese components (if any; at ambient temperature) and oil (if any; at ambient temperature) are mixed into the cheese base mixture for about 10 to 30 seconds. Thawed meat (generally at temperature in the range of about 32 to 40°F [about 0.00 to about 4.44°C]) is added with mixing continuing for about 10 to 30 seconds; water (generally at a temperature of about 50 to 60°F [about 10.00 to about 15.56°C]), if needed, is generally added last during the last half of the meat mixing cycle. The temperature of the meat when incorporated into the filling mixture generally varies with the type of meat filling. Meats having greater physical integrity (i.e., diced ham or pepperoni) are preferably at the higher end of the 32 to 40°F (0.00 to 4.44°C) range; meats having less physical integrity (i.e., sausage) are preferably at the lower end. Preferably, the total mixing time is less than one minute. The resulting filling mixture should be generally free flowing before extrusion and compressible during extrusion. Preferably, the resulting filling has only minimal agglomeration; any agglomerated lumps should be less than about 3 inches (about 7.62 cm) in diameter and more preferably less than about 1 inch (about 2.54 cm) in diameter.

The dough is formulated so that it can be co-extruded with the filling. Generally, the dough is formulated to include the typcial dough making steps of preparing a dough by mixing flour (preferably having a protein-content of about 11 to about 13 percent), water, yeast, salt, saccharides, a freshnesspromoting combination of a starch-degrading enzyme and emulsifier, and shortening (i.e., hard fat). The hard fat appears to prevent stickiness of the dough. Dough prepared with oils (i.e., unsaturated fats) tended to be very sticky and were not acceptable. Preferred starch-degrading enzymes include maltogenic enzymes which are resistant to inactivation by heat up to temperatures of at least about 82 °C. Especially preferred enzymes are recombinant maltogenic amylases available from Novo Nordisk under the trademark NOVAMYL.

The dough formulations must, however, be prepared so that the dough can be extruded, proofed, and baked to obtain a dough enrobed filling product with desirable organoleptic properties. Preferably, the total protein content of the dough is about 14 to about 16 percent. Generally, increased levels of yeast and corn syrup are necessary, as compared to conventional dough formulations, to provide an extrudable dough mixture. Suitable dough mixtures can be prepared using the following processing steps. Flour is added to a suitable dough mixer (e.g., vertical, single hook mixer). Dry ingredients are then incorporated into the flour with mixing. The mixer is then stopped to add fluid components (i.e., shortening, monoglycerides, diglycerides). The mixture is then started at low speed at which time the high fructose corn syrup (at about 70°F [about 21.11°C]) and water (about 55°F [about 12.78°C]) are added; mixing is continued for about 1 minute at low speed. The mixer speed is then increased (i.e., high speed) and mixing continued for about 8 to about 12 minutes (depending, at least in part, on batch size). The resulting dough should be fully developed and extensible (i.e., can be stretched paper thin without tearing) as well as being dry and soft or silky to the touch. If still sticky, additional mixing (generally only a few minutes or less) may eliminate this problem. The dough should be fully developed before co-extrusion. Although such a fully developed dough will be disrupted during extrusion, at least some of the disulfide bonds will reform during proofing and enhance baking performance. An under developed dough extrudes very wet and is difficult to handle.

Dough temperature is targeted for about 75 ± 3°F (about 23.89 ± 1.67°C) for the present co-extrusion process. Generally, the temperature of the added water is used to achieve the desired dough temperature. Warm or over mixed dough will extrude satisfactorily but the resulting product can be difficult to handle; product weight may also be difficult to control. Cold or under mixed dough may be rough textured and difficult to handle; a reduction in water for such dough can improve handling but can also result in a hard crusty finished product.

Generally, acceptable dough mixtures can be prepared containing about 45 to about 60 percent flour, about 25 to about 35 percent water, about 0.5 to about 3 percent yeast, about 0 to about 10 percent high fructose corn syrup, and about 0 to about 2.5 percent salt. One or more additional ingredients such as gum, vital wheat gluten, egg components, and preservative may also be present. Suitable ingredient ranges, indicated as Baker's percentages (i.e., based on 100 per flour) are as follows:

| Ingredient | Range (% flour basis) | Preferred Range (% flour basis) | Most Preferred (% flour basis) |
|---|---|---|---|
| Flour | 100 | 100 | 100 |
| Water | 50-65 | 54-58 | 55-57 |
| High Fructose Corn Syrup (71% solids, 42% fructose) | 5 - 18 | 6 - 15 | 11 - 13 |
| Yeast | 0.25 - 5 | 1 - 5 | 3 |
| Salt | 0-5 | 2-3 | 2.5 |
| Wheat Gluten | 0 - 5 | 2 - 4 | 3 |
| Egg White Solids | 0-5 | 0 - 2 | 1 |
| Mono- & Diglycerides | 0 - 5 | 0 - 2 | 1 |
| Enzyme | 0 - 1 | 0.1 - 0.5 | 0.3 |
| Gum | 0 - 1 | 0.1 - 0.5 | 0.3 |
| Shortening | 3 - 20 | 5 - 15 | 10 - 12 |
| Preservative | 0 - 0.1 | 0 - 1 | - |

The flour is preferably hard wheat bread flour made from hard spring or winter wheat. The shortening is preferably a solid, hydrogenated or partially hydrogenated vegetable oil; for example, a hydrogenated or partially hydrogenated cottonseed, corn, soybean, sunflower, canola, or mixture thereof, and similar hydrogenated or partially hydrogenated vegetable oils and mixtures. The preferred vegetable oils are corn, canola, sunflower seed, cottonseed and soybean oils, or mixtures thereof. The shortening may have a butter flavoring agent added to the shortening by the producer.
Alternatively, a butter flavoring agent or other flavoring agent may be added to the recipe in an amount known to those skilled in the art or in accordance with the flavor manufacturer's recommendations. Compressed yeast may be substituted for the dried yeast used in the above basic recipe. If compressed yeast is used, the baker's percentage or weight is approximately doubled to account for the water content of the compressed yeast; likewise, the amount of water added may be reduced to account for the water content of the compressed yeast.

The products of this invention will desirably contain (weight basis prior to baking) about 25 to about 70 percent filling (including any particulates) and about 30 to about 75 percent dough. After baking the water activity of the crust and of the filling should be within 0.06 units, preferably within 0.04 units and most preferably within 0.02 units. The cylindrical-shaped baked products of this invention preferably have an overall diameter of about 1.25 to about 1.5 inches (about 3.18 to about 3.81 cm) and a filling diameter of about 0.5 to about 1 inch (about 1.27 to about 2.54 cm).

The following examples are intended to illustrate the invention and not to limit it. Unless otherwise noted, all percentages are by weight.

**Example 1.** This example illustrates a ham and cheese filling material suitable for use in the present invention. Filling ingredients are as follows:

| **Ingredients** | **Amount (%)** |
|---|---|
| Shredded Old English Cheddar Cheese | 46.0 |
| Starch (National 104) | 2.0 |
| Methyl Cellulose | 0.7 |
| Disodium Phosphate | 0.8 |
| Monosodium Phosphate | 0.5 |
| Diced Ham (1/4 inch [0.64 cm]) | 50.0 |

The cheese (at about 35 ± 5°F [about 1.67 ± 2.78°C]) and dry ingredients (starch, methyl cellulose, and phosphates at ambient temperatures) were mixed in a paddle mixer (Biro Model DMX 300) for about 15 seconds. The ham (e.g., frozen ham staged to about 35 ± 5°F [about 1.67 ± 2.78°C]) was then added with mixing for another 15 seconds. The resulting filling (about 40 ± 5°F [about 4.44 ± 2.78°C]) could be co-extruded using the methods of the present application. Starch and methyl cellulose were included in the filling to assist in preventing blowouts during the baking step; these ingredients also aided in moisture retention. The phosphates enhanced the cheddar notes in the filling.

Using a smoke flavored ham, the filling had a well rounded smoke ham flavor with mild cheddar notes. Total moisture content was in the range of about 52 to about 56 percent which provides the lubricity needed during the extrusion process; A_{w} was in the range of about 0.95 to about 0.96. Excessive moisture (i.e., a wet filling mixture), however, may cause bridging in the extruder hopper. Generally, sufficient water is present in the ingredients so no additional water is required. If necessary, however, water can be added to the mixture; for example, it may be necessary to add water if the moisture associated with the frozen ham is allowed to drain during staging to the desired temperature prior to mixing.

**Example 2.** This example illustrates a pepperoni and cheese filling material suitable for use in the present invention. Filling ingredients are as follows:

| **Ingredients** | **Amount (%)** |
|---|---|
| Whole Milk Mozzarella | 45.9 |
| Diced Pepperoni | 40.0 |
| Grated Parmesan Cheese | 2.4 |
| Grated Romano Cheese | 2.9 |
| Soybean Oil | 2.0 |
| Spices | 0.7 |
| Starch (National 104) | 0.8 |
| Methyl Cellulose | 0.3 |
| Water | 5 |

The mozzarella cheese (at about 38 ± 3°F [about 3.33 ± 1.67°C]) and dry ingredients (starch, methyl cellulose, and spices at ambient temperatures) were mixed in a paddle mixer (Biro Model DMX 300) for about 5 seconds. The grated Parmesan and Romano cheeses (ambient temperature) were added and mixed for about 10 seconds at which point the oil (ambient temperature) was added with an additional 5 seconds mixing. Finally, the pepperoni (frozen pepperoni staged to about 35 ± 3°F [about 1.67 ± 1.67°C]) was added and mixed for about 20 seconds; water (at about 55-60°F [about 12.78 to about 15.56°C]) was added during the last 10 seconds of mixing. The resulting filling (about 40 ± 5°F [about 4.44 ± 2.78°C]) could be co-extruded using the methods of the present application. Using the cooler filling mixtures often resulted in extruder stall, pepperoni integrity was often lost after extrusion using warmer filling mixtures. Blending the oil with the mozzarella cheese prior to addition of the dry ingredients resulted in excessive lumpiness.

The added oil and water mainly acted as processing aids to provide the desired lubricity for the extrusion process. Generally, mozzarella cheese aged for more than about 45 days will generally result in a somewhat more lumpy filling than desired. Total moisture content was in the range of about 37 to about 41 percent which provides the lubricity needed during the extrusion process; A_{w} was in the range of about 0.93 to about 0.95. Excessive moisture (i.e., a wet filling mixture), however, may cause bridging in the extruder hopper. Too dry a filling will tend to cause the extruder to stall.

**Example 3.** This example illustrates a cheese and sausage filling material suitable for use in the present invention. Filling ingredients are as follows:

| **Ingredients** | **Amount (%)** |
|---|---|
| Whole Milk Mozzarella | 41.06 |
| Cooked Spicy Italian Sausage | 40.0 |
| Tomato Powder | 3.0 |
| Grated Parmesan Cheese | 3.4 |
| Grated Romano Cheese | 3.9 |
| Soybean Oil | 1.99 |
| Spices | 1.1 |
| Starch (National 104) | 0.8 |
| Methyl Cellulose | 0.3 |
| Salt | 0.45 |
| Water | 4.0 |

The mozzarella cheese (at about 38 ± 3°F [about 3.33 ± 1.67°C]) and dry ingredients (starch, methyl cellulose, salt, tomato powder, and spices at ambient temperatures) were mixed in a paddle mixer (Biro Model DMX 300) for about 5 seconds. The grated Parmesan and Romano cheeses (ambient temperature) were added and mixed for about 10 seconds at which point the oil (ambient temperature) was added with an additional 5 seconds mixing. Finally, the sausage (frozen sausage staged to about 30 ± 5°F [about -1.11 ± 2.78°C]) was added and mixed for about 20 seconds; water (at about 55-60°F [about 12.78 to about 15.56°C]) was added during the last 10 seconds of mixing. The resulting filling (about 35 ± 5°F [about 1.67 ± 2.78°C]) could be co-extruded using the methods of the present application.

The sausage was added at a lower temperature than the other meats since it is more fragile and has a tendency to "smear" or break up. The added oil and water mainly acted as processing aids to provide the desired lubricity for the extrusion process. Moisture content of the filling was about 45 to 48 percent; A_{w} was in the range of about 0.94 to about 0.96. Tomato powder enhanced the overall flavor and appearance of the resulting product. The filling produced had a loose consistency and was free flowing with minimal lumps or pastiness.

**Example 4.** This example illustrate the preparation of dough suitable use in the co-extrusion process of this invention.

| | **Amount (Baker's %)** |
|---|---|
| **Dry Ingredients** | |
| Pizza Flour | 100 |
| Vital Wheat Gluten | 3.0 |
| Granulated Salt | 2.5 |
| Instant Dry Yeast | 2.95 |
| Dried Egg Albumin | 1.0 |
| Novamyl Enzyme | 0.32 |
| Calcium Propionate | 0.32 |
| Guar Gum | 0.22 |
| | |

| **Wet Ingredients** | |
|---|---|
| Water | 56.0 |
| High Fructose Corn Syrup (42%) | 13.0 |
| All Purpose Shortening | 11.0 |
| Mono & Diglycerides | 1.0 |

Using a single hook Benier mixer, the flour and dry ingredients were mixed under low speed for about one minute. The mixer was then stopped and the shortening, monoglycerides, and diglycerides were added. Mixing was resumed under low speed for one minute while adding the corn syrup (at about 70°F [about 21.11°C]) and water (at about 55°F [about 12.78°C]). Mixing was continued under high speed for about 8 to 9 minutes for 200 pound (90.72 kg) batches or about 9 to 10 minutes for 300 pound (136.08 kg) batches. If the dough remains sticky, mixing can be continued (usually one additional minute mixing is sufficient). Dough temperature should be about 75 ± 3°F (about 23.89 ± 1.67°C) for co-extrusion with the filling. Dough temperature can most easily be adjusted using water. For co-extrusion, the dough should be fully developed.

**Example 5.** This example illustrates the preparation of the dough enrobed filling product of this invention. The various fillings described in Examples 1-3 were co-extruded with the dough mixture described in Example 4. The fillings were normally at about 35 to about 42°F (about 1.67 to about 5.56°C) and the dough was normally at about 73 to about 78°F (about 22.78 to about 25.56°C) during the extrusion process. Co-extrusion was carried out using a Vemag co-extrusion system (essentially as illustrated in Figure 2). The Vemag co-extrusion system is comprised of essentially four components: (1) dough extruder (Model 500 Continuous Stuffer), (2) filling co-extruder (PC 878 Portioner), (3) co-extrusion fusion fitment or co-extrusion head, and (4) a crimper system. In general, the co-extrusion system continuously pumps dough from the dough extruder into the extrusion fitment while the filling extruder intermittently extrudes filling into the extrusion fitment. This operation produces a continuous dough rope at the exit port of the extrusion fitment with 5 inch (12.70 cm) long portions of filling inside the dough separated by approximately 0.5 inches (approximately 1.27 cm) (i.e., no filling). This ½ inch (1.27 cm) portion contains only dough. The continuous rope is then fed into the crimper system where a cutting head subdivides the rope into individual pieces by cutting at the portions having no dough. The four components must work synchronously in order to produce pieces of the appropriate size, weight specifications and have the filling fully sealed within the dough lattice.

Dough extrusion was accomplished using an infeed screw (or ring gear) in the hopper and pulling a vacuum at the bottom of the hopper in order to feed dough into a twin screw setup. The latter pushes dough into the nozzle of the co-extrusion fitment or head. The dough should be fully developed as the twin screw disrupts the gluten network. A developed dough will reform some of the disrupted disulfide bonds during proofing and enhance baking results. Extrusion rates were adjusted so that the final product had a dough content of about 3.75 oz. (about 106.31g) per piece. Vacuum was maintained throughout the extrusion process to prevent dough weights from fluctuating significantly. Light dough weights can be increased by increasing the dough extrusion speed or lowered by lowering the dough extrusion speed.

The filling is fed to the dual screw component of the extruder using an "aggressive" hopper infeed screw or ring gear and a high vacuum (because of the stiffness of the fillings used) throughout the extrusion process. The filling should be free flowing in the hopper but easily compressible in the twin screw chamber of the extruder to provide for an easily pumped filling and control for proper weight and size. Moreover, all filling components should retain their component integrity and filling should be a free flowing homogenous mixture.

Maintaining a proper vacuum during extrusion assures a steady feeding of filling into the co-extruder. Filling weights can be controlled by the weight setting on the control screen. Light filling weights can be increased by increasing the weight setting or lowered by lowering the filling weight setting. The filling length is controlled by the speed setting. To lengthen the filling piece the speed should be slowed and to shorten the piece the speed should be made faster. The diameters of the nozzles in the co-extrusion head can be adjusted to obtain the desired diameter, length, and weight of product components. A nozzle diameter of 25.75 mm was used for the outer dough horn (i.e., the dough exit outlet) and a diameter of 16 mm was used for the inner filling horn (i.e., the filling exit outlet).

Centering of the filling axially (i.e., cross-sectionally) within the dough requires that the dough and filling exit ports (i.e., the inner and outer horns of the extrusion head) be centered. During operation, the exit ports may shift relative to one another requiring adjustment; alternatively the exit ports may be fixed in place so that drift cannot occur. Dough extrusion follows a straight path from the extruder toward the crimper in order to minimize shear of the gluten structure. Filling extrusion follows a more tortuous path by making a 90° turn (see Figure 2). Alternatively, the co-extrusion head can be modified as illustrated in Figure 3 to provide a smoother, less tortuous path for the filling.

The crimper system used employed a take away conveyor and a crimper (or cutter) which subdivides the extruded dough/filling rope into individual pieces of required length. The overall process was adjusted to achieve about 108 pieces per minute measuring 5" (12.70 cm) in length. The take away conveyor was set to run at about 54 feet (16.46m) per minute. The co-extrusion system was adjusted to extrude product at a rate equal to the speed of the conveyor in order not to stretch or compress the extruded rope.

The cut must be made at the 0.5 inch (1.27 cm) dough "bubble" (i.e., no filling) to provide individual pieces with the filling completely enclosed within dough. Coarse adjustment can be made wherein the distance from the end of the outer extrusion nozzle to the crimper cutting position is a multiple of 5 inches (12.70 cm) (i.e., the length of the filling sections). Fine adjustment can be made by pulsing the filling, and its position within the dough rope, using an electronic eye at the side of the crimper. A small movement of the "eye" will cause the pulse timing to be advanced or delayed hence changing the position of the filling within the dough. The effect of this adjustment is to change the position of the cutoff relative to the filling.

From the co-extruder, the continuous rope is then fed into the crimper system where a cutting head subdivides the rope into individual pieces by cutting at the positions having no dough. The individual pieces from the crimping operation can, if necessary, be rolled to final size (length and diameter) and texture using a pressure board. The product pieces can then be proofed and baked. The individual products from the co-extrusion and crimping process were generally in the range of about 55 to about 63°F (about 12.78 to about 17.22°C).

The individual products were placed in baking pans (generally with 1/8 inch [0.32 cm] perforations) and then proofed at 105 to 115°F (40.56 to 46.11°C) and 30 to 40 percent relative humidity for 25 to 30 minutes. The length of the proofing process is significantly longer than that normally used for yeast leavened baked products. It appears that the extrusion process disrupts the gluten structure formed during mixing and that additional proof time is required to restore this structure so that the desired texture for the final product can be achieved. Additionally, the dough to metal contact that occurs during extrusion causes a significant reduction in dough temperature (i.e., to about 58°F [about 14.44°C]) which appears to cause significant shock to the yeast. The yeast requires time to recover, thus requiring longer proof times.

The proofed products, still in the pans used for proofing, were then baked in a five-zone Meincke Oven. The temperature of the various zones, fresh air inlet percentage, and top and bottom heat application can be adjusted as needed to provide good quality product. As those skilled in the art will realize, adjustment of these parameters (as well as other operational parameters) can be carried out empirically on the actual equipment to be used. Generally, temperatures of about 550 to about 600°F (about 287.78 to about 315.56°C) for about 3 to about 5 minutes provided good quality product.

The baked products, after staging for about 10 minutes, were then frozen in a BOC spiral nitrogen freezer at -100°F (-73.33°C) for about 20 minutes. Product at the inlet of the freezer was about 125°F (about 51.67°C) and about 5°F (about -15.0°C) at the outlet. The frozen products were then sprayed with oil (about 2 to 3 grams oil/piece) and packaged. The final individual product was about 100 grams, with a diameter of about 1.5 inches (about 3.81 cm) and a length of about 6 inches (about 15.24 cm) wherein the filling is fully enrobed within the baked dough product. The resulting packaged products can be shipped and stored frozen and, as desired, heated on, for example, a roller grill in a retail or other outlet. Once reheated, the resulting product has a very soft and bread-like texture with excellent overall organoleptic properties.

As those skilled in the art will realize, parameters throughout the process can be varied to obtain product having desirable properties. Although extensive guidance has been provided in the present specification with regard to these parameters, optimal performance in a given system can best be determined empirically since, to a significant extent, these parameter will be expected to vary depending on the actual equipment, ingredients, and the like which are used. Additionally, the optimal value for a given parameter will, in most cases, change as other parameters within the particular system are adjusted.

## Claims

1. A food product comprising a filling (14) enrobed in a yeast leavened dough (12) suitable for baking, the filling having an A_{w}, as formulated, of from about 0.89 to about 0.96 and a moisture content of about 30 about 50 percent, and the dough (12), after baking, having a bread-like texture, wherein the food product is produced by co-extruding the filling (14) within the dough (12).

2. A food product according to claim 1, wherein the co-extruded filling and dough (12) is extruded, proofed, baked, and then frozen to provide a cylindrical-shaped food product suitable for heating on a roller grill.

3. A food product according to claim 2, wherein the frozen cylindrical-shaped product has oil applied to its outer surfaces.

4. A food product according to claim 3, wherein the oil is applied by spraying and the food product contains about 0.25 to about 5 grams of oil.

5. A method of preparing cylindrical-shaped pre-baked filling enrobed dough products suitable for heating on a roller grill, said method comprising
(1) preparing an extrudable yeast leavened dough mixture (12);
(2) preparing an extrudable filling mixture (14);
(3) forming a cylindrical-shaped dough enrobed filling continuous rope (10) by co-extruding the extrudable dough mixture and the extrudable filling mixture (14);
(4) cutting the continuous rope (10) into appropriate sizes to form individual cylindrical-shaped unbaked dough enrobed filling products;
(5) proofing the individual cylindrical-shaped unbaked dough enrobed filling products;
(6) baking the proofed individual cylindrical-shaped unbaked dough enrobed filling products to form the cylindrical-shaped pre-baked dough enrobed filling products; and
(7) cooling the cylindrical-shaped pre-baked dough enrobed filling products to a suitable storage temperature.

6. A method according to claim 5, wherein the extrudable filling (14) comprises about 94 to about 99 percent process cheese, about 0.2 to about 2 percent water-soluble hydrocolloid gum, and about 0.5 to about 4 percent pregelantinized starch and the yeast leavened dough comprises about 45 to about 60 percent flour, about 25 to about 35 percent water, about 0.5 to about 3 percent yeast, about 0 to about 10 percent high fructose corn syrup, and about 0 to about 2.5 percent salt.

7. A method according to claim 5 or claim 6, wherein the individual cylindrical-shaped unbaked dough enrobed filling products are proofed at a temperature of about 90 to about 120°F (about 32.22 to about 48.89°C) and a humidity of about 25 to about 90 percent for about 20 to about 60 minutes.

8. A method according to any one of claims 5 to 7, wherein the individual cylindrical shaped unbaked dough enrobed filling products are proofed at a temperature of about 105 to about 115°F (about 40.56 to about 46.11°C) and a humidity of about 30 to about 40 percent for about 25 to about 30 minutes.

9. A method according to any one of claims 5 to 8, wherein the proofed individual cylindrical-shaped unbaked dough enrobed filling products are baked at about 300 to about 525°F (about 148.89 to about 273.89°C) for about 3.5 to about 6 minutes.

10. A method according to any of claims 5 to 9, wherein the filling (14) is fully enrobed in the yeast leavened dough (12).

11. A method according to any one of claims 5 to 10, wherein the suitable storage temperature provides frozen cylindrical-shaped pre-baked dough enrobed filling products and wherein oil is applied to the frozen cylindrical-shaped pre-baked dough enrobed filling products.

12. A method according to claim 11, wherein the cylindrical-shaped pre-baked dough enrobed filling products have lengths of about 2 to about 9 inches (about 5.08 to about 22.86 cm) and diameters of about 0.5 to about 2 inches (about 1.27 to about 5.08 cm), and wherein the amount of oil applied is about 0.25 to about 5 gram.
